# EUROPÄISCHE PATENTSCHRIFT

(11) **EP 2 559 727 B1**
(45) Veröffentlichungstag und Bekanntmachung des Hinweises auf die Patenterteilung: **14.05.2014**
(21) Anmeldenummer: 11306045.3
(22) Anmeldetag: 16.08.2011
(51) Int. Cl.: C08L 11/00, H01B 7/29

(54) **Kältefeste Chloropren-Mantelmischung**
Cold-resistant chloroprene sheath mixture
Mélange de gaine au chloroprène résistant au froid

(43) Veröffentlichungstag der Anmeldung: 20.02.2013
(73) Patentinhaber: Nexans, 75008 Paris (FR)
(72) Erfinder: Dr. Cornelissen, Christian, 41238 Mönchengladbach (DE); Niehaus, Armin, 5911 GE Venlo (NL)
(74) Vertreter: Feray, Valérie

(56) Entgegenhaltungen:
- JP-A- 10 060 448
- JP-A- 61 016 938

## Beschreibung

Die Erfindung betrifft eine kältefeste Chloropren-Mantelmischung für Kabel, die nach der Vernetzung kältefeste und kälteelastische Vulkanisate ergibt, die insbesondere für Extra-Heavy-Duty-Anwendungen, z.B. gemäß CSA-Norm C22.2 Nr. 96-09 für bewegte Leitungen zur Energieversorgung, geeignet ist. Entsprechend betrifft die Erfindung insbesondere Kabel mit einem Mantel aus der vernetzten Mantelmischung und ein Verfahren zur Herstellung von Kabeln mit der Mantelmischung. Die erfindungsgemäße Mantelmischung ist auf Basis von Chloropren, das optional in Mischung mit zumindest einem weiteren Polymer vorliegt, wobei der Polymerbestandteil bevorzugt aus Chloropren besteht.

Die Mantelmischung bildet gegen Öl und gegen mechanische Belastung, insbesondere gegen Abrieb hoch beständige Mäntel. Überdies weisen Mäntel aus der Mantelmischung eine hohe thermische Beständigkeit, eine gute Witterungsbeständigkeit, z.B. gute UV- und Ozonbeständigkeit und vorzugsweise die Möglichkeit für helle Farbeinstellungen auf. Für die Zwecke der Erfindung umfassen Kabel elektrische und optische Kabel und Leitungen. Ein weiterer Vorteil dieser Mantelmischung ist, dass sie eine gute Verarbeitbarkeit auch auf herkömmlichen Extrusionsanlagen aufweist, die bei der Herstellung von Kabeln eingesetzt werden. In Entsprechung zur hohen Beständigkeit der vernetzten Mantelmischung betrifft die Erfindung auch die Verwendung von Kabeln und Leitungen als Energiekabel und/oder Steuerungsleitung im Bergbau oder für Land- und Wasserfahrzeuge.

Die Mantelmischung zeichnet sich durch eine hohe Belastbarkeit der daraus hergestellten Mäntel aus, z.B. eine hohe Kältedehnung, insbesondere von mindestens 30% bei -50°C, bevorzugt in Kombination mit einem Modul 200 (Mod200) von mindestens 4 bis mindestens 5 N/mm².

### Aufgabe der Erfindung

Die Aufgabe der Erfindung liegt in der Bereitstellung einer Mantelmischung auf Basis von Chloropren, die für schwere mechanische Belastungen auch bei tiefen Temperaturen geeignet ist. Kabel mit einem Mantel aus der Mantelmischung sollen bei Umgebungstemperaturen von -50°C für einen Einsatz verwendbar sein.

### Allgemeine Beschreibung der Erfindung

Die Erfindung löst die Aufgabe mit den Merkmalen der Ansprüche und insbesondere mit einer Mantelmischung bzw. einem Kabel, das die vernetzte Mantelmischung aufweist, insbesondere einen Außenmantel daraus. Die Mantelmischung weist als Polymerbasis Chloropren (Poly(2-chlor-1,3-butadien) auf, insbesondere Chloropren mit einer Mooney Viskosität ML (1+4) 100°C von 49±5 MU, z.B. gemäß ISO289/ASTM D 1646. Das Chloropren weist bevorzugt einen Chlorgehalt von 40% auf.

Die Mantelmischung weist auf oder besteht aus Chloropren als vernetzbarem organischem Polymer mit den angegebenen Füllstoffen und Zuschlagstoffen, insbesondere nicht polymerisierbaren Zuschlagstoffen, z.B. Verarbeitungshilfsmittel und Weichmacher, sowie einem Vernetzungssystem, das insbesondere ein Vernetzungsmittel und/oder Vulkanisationsbeschleuniger, optional einen Verzögerer und einen Aktivator (vorzugsweise ZnO) aufweist, sowie Haftvermittler. Bevorzugt sind als Zuschlagstoffe Stabilisator, Alterungsschutzmittel, optional Farbmittel, vorzugsweise mit einem Aufheller, enthalten. Als Füllstoff ist Kieselsäure (Silica), bevorzugt mit hoher spezifischer Oberfläche enthalten. Die hohe spezifische Oberfläche der Kieselsäure beträgt vorzugsweise zumindest 170 qm/g.

Die erfindungsgemäße Mantelmischung zeichnet sich dadurch aus, dass sie nach Vernetzung eine ausgewogene Kombination von Eigenschaften aufweist, die sie zur Verwendung bei hohen mechanischen Belastungen auch bei niedrigen Temperaturen geeignet machen, insbesondere gute Kälteeigenschaften, z.B. eine Kältedehnung gemäß EN 60811-1-4 bei -50°C von zumindest 30%, bevorzugter von zumindest 40%, noch bevorzugter von zumindest 50%, insbesondere bevorzugt von zumindest 60%, bevorzugt in Kombination mit einer hohen Witterungsbeständigkeit, z.B. die Beständigkeit in der Ozonprüfung nach DIN VDE 0472 Teil 805 Prüfart B, einer sehr guten thermischen Beständigkeit, z.B. bei Heißluftalterung über 7d bei 100°C gemäß CSA-Norm C22.2 Nr. 96-09, und einer hohen mechanischen Belastbarkeit in Anlehnung an den Mischungstyp 5GM5 nach DIN VDE 0207 Teil 21, vorzugsweise in Kombination mit einer hohen Abriebfestigkeit. Die Mantelmischung weist insbesondere eine hohe Reißdehnung gemäß EN 60811-1-4 bei -50°C von mindestens 30% auf, eine hohe Weiterreißfestigkeit sowie eine gute Ölbeständigkeit, z.B. gegen Kontaktierung mit Mineralöl IRM 902. Die erfindungsgemäße Mantelmischung erfüllt überdies die Anforderungen für extrem belastbare Kabel (extra heavy duty) nach der CSA-Norm C22.2 Nr. 96-09 für bewegte Leitungen zur Energieversorgung.

Die Mantelmischung weist überdies im unvernetzten Zustand eine gute Verarbeitbarkeit auf, so dass ein Verfahren zur Herstellung von Kabeln und Leitungen mit einem Mantel aus der vernetzten Mantelmischung unter Verwendung üblicher Kneter und Extruder durchführbar ist.

Diese Eigenschaften machen die vernetzte Mischung insbesondere zur Verwendung als Mantel von Kabeln und Leitungen geeignet, die für einen beweglichen Einsatz bei Temperaturen bis -40°C ausgelegt bzw. eingerichtet sind, z.B. zur Verwendung als Leitung an beweglichen Maschinenteilen, oder die für feste Verlegung bis -50°C ausgelegt sind bzw. für die Verwendung als fest verlegte Leitung bis -50°C eingerichtet sind.

Entsprechend betrifft die Erfindung ein Verfahren zur Herstellung von Kabeln oder Leitungen durch Extrusion der Mantelmischung mit anschließender Vernetzung, wobei sich die Kabel oder Leitungen durch die besondere Eigenschaftskombination mit Kälteeigenschaften der aus der Mantelmischung bestehenden Mischung auszeichnen und daher insbesondere für die Verwendung als Tieftemperaturleitung mit hoher mechanischer Belastung eingerichtet sind.

Die erfindungsgemäße Mantelmischung weist auf oder besteht aus
- 100 phr Chloropren, das vorzugsweise 40 % Chlor enthält,
- Stabilisator, bevorzugt zu 3-7 phr, bevorzugter zu 4-5 phr, z.B. MgO,
- Alterungsschutzmittel, bevorzugt zu 3-7 phr, bevorzugter zu 4-6 phr
- optional Farbpigment, bevorzugt technischer Ruß, vorzugsweise mit einer spezifischen Oberfläche von 40qm/g und einer Struktur (OAN) von 120ml/100g, insbesondere zu 1-3 phr, bevorzugt 2 phr,
- einem Vernetzungssystem,
- Haftvermittler, insbesondere zu 5,2-12,2 phr, bevorzugter zu 7,2-10,2 phr,
- Verarbeitungshilfsmittel, insbesondere zu 8-15 phr, bevorzugt 10-13 phr,
- mineralischer Füllstoff, bevorzugt kalzinierte oder pyrogene Kieselsäure, vorzugsweise mit hoher spezifischer Oberfläche, zu 40-55 phr, bevorzugt 43-52 phr, bevorzugter zu 47-50 phr und
- 5-10 phr Weichmacher, bevorzugt Weichmacher mit einem Stockpunkt kleiner -60°C , insbesondere zu 4-10 phr, bevorzugt zu 6-8 phr, z.B. Bis(2-ethylhexyl)adipat, Di-2-ethyhexyladipat und/oder Dioctyladipat.

Die in den Polymermischungen angegebenen Teile sind als phr (parts per hundred rubber) zu verstehen, d.h. die Gewichtsteile der Bestandteile sind auf 100 Gewichtsteile Polymer in der Mischung bezogen.

Alterungsschutzmittel können z.B. Pentaerythritol-bis(tetrahydrobenzaldehydacetal), insbesondere zu 1-2 phr, bevorzugt zu 1,5 phr, Antioxidanz, insbesondere zu 0,7-1,3 phr, bevorzugt 1 phr, z.B. eine Diphenylverbindung, und/oder eine Bisphenolverbindung, insbesondere zu 1,3-2,7 phr, bevorzugt zu 2 phr sein, z.B. 2,2'-methylenbis[6-(1,1-dimethylethyl)-4-methylphenol umfassen oder daraus bestehen.

Verarbeitungshilfsmittel können z.B. Ozonschutzwachs, bevorzugt zu 3-6 phr, bevorzugter 4 phr, z.B. mikrokristallines Wachs, Paraffin, bevorzugt zu 4-8 phr, bevorzugter zu 5-7 phr, Stearinsäure, insbesondere zu 0-1 phr, und/oder Silikonöl und Mischungen dieser, insbesondere zu insgesamt 8 bis 15 phr, umfassen oder daraus bestehen.

Das Vernetzungssystem kann insbesondere Verzögerer, bevorzugt zu 0,9-1,5 phr, bevorzugter zu 1,2 phr, z.B. Dibenzothiazyldisulfid, Vernetzungsmittel und/oder Vulkanisationsbeschleuniger, insbesondere zu 0,95-1,55 phr, bevorzugter zu 1,25 phr, z.B. N,N'-Ethylenthioharnstoff, Vernetzer/Alterungsschutzmittel, insbesondere zu 1,4-2 phr, bevorzugter zu 1,7 phr, z.B. Methylmercaptobenzimidazol, das insbesondere zu 70% in Elastomerbinder und Dispergator enthalten ist, sowie Aktivator, insbesondere 4-6 phr, bevorzugt 5 phr, z.B. ZnO, und Mischungen umfassen oder daraus bestehen.

Haftvermittler, insgesamt bevorzugt zu 5,2 bis 12,2 phr, bevorzugter zu 7,2 bis 10,2 phr, kann insbesondere Triethanolamin und/oder ein Schwefelsilan, insbesondere zu 50% auf Wachsträger, bevorzugt 2,2-4,2 phr, bevorzugt 3,2 phr Triethanolamin und Schwefelsilan, vorzugsweise zu 50% auf Wachsträger, und Mischungen dieser umfassen oder daraus bestehen.

### Genaue Beschreibung der Erfindung

Die erfindungsgemäße Mantelmischung wird nun anhand von Beispielmischungen und deren mechanischen Eigenschaften, insbesondere der hohen Kältebeständigkeit und Kälteelastizität beschrieben. Dabei zeigen
- Figur 1 Messwerte der Kältedehnung von vernetzten Mantelmischungen bei -50°C und
- Figur 2 Messwerte für das Modul200 (Mod200) von vernetzten Mantelmischungen.

Die Tabelle 1 zeigt erfindungsgemäße Mischungen. Die Mischungsbestandteile wurden im Standardzyklus in einer Stufe in einem 2,8L-Laborkneter mit einem Füllfaktor von 0,7 gemischt und auf einem Laborwalzwerk fertig gemischt.

**Tabelle 1: Erfindungsgemäße Mischungen**

| Inhaltsstoff (phr) | Mischung A | Mischung B |
|---|---|---|
| Chloropren | 100 | 100 |
| Stabilisator (MgO) | 4 | 5 |
| Alterungsschutzmittel | 5,5 | 4,5 |
| Technischer Ruß | 2 | 2 |
| Vernetzungssystem aus 1,2 phr Dibenzothiazyldisulfid, 1,25 phr N,N'-Ethylenthioharnstoff, 1,7 phr 70% Methylmercaptobenzimidazol in Elastomerbinder/Dispergator, 5 phr ZnO | 8,15 | 9,15 |
| Haftvermittler | 10,2 | 7,2 |
| Verarbeitungshilfsmittel (Ozonschutzwachs, Paraffin, Stearinsäure) | 12,5 | 10,5 |
| Füllstoff (Silica) | 47 | 50 |
| Weichmacher (Dioctyladipat) | 6 | 8 |

Als Haftvermittler wurde eine Mischung aus Triethanolamin und Schwefelsilan eingesetzt. Die rheologischen Eigenschaften wurden an der Mantelmischung gemessen, die Eigenschaften der vernetzten Mantelmischung, insbesondere Festigkeiten und Kälteeigenschaften, wurden überwiegend an dampfvernetzten Platten (z.B. 150s bei 200°C) gemessen, die aus Walzfellen herstellt waren. Einige Prüfungen wurden an extrudierten Mänteln bzw. Schläuchen (20 mm Durchmesser) durchgeführt, die ebenfalls im Dampf (150s, 200°C) als produktionsnahe Bedingungen vernetzt waren. Die Eigenschaften einer erfindungsgemäßen Mischung sind stellvertretend in der nachfolgenden Tabelle 2 im Vergleich zu denen einer qualitativ hochwertigen Vergleichsmischung angegeben, die das Anforderungsprofil 5GM5 erfüllt.

**Tabelle 2: Eigenschaftsvergleich von Mantelmischungen**

| Lfd. Nr. | Eigenschaften | | Dimension | Zielwert | Messwerte | |
|---|---|---|---|---|---|---|
| | | | | | Vergleich | erfindungsgemäß |
| 1. | Rheologie | | | | | |
| 1.1 | ML 1+4 100°C | | ME | | 42 | 53 |
| 1.2 | MS T5 121°C | | Minuten | | 17:31 | 13:20 |
| 1.3 | Rheometer 180°C | t2 | min : sec | | 0:48 | 0:27 |
| | | t90 | min : sec | | 6:38 | 8:12 |
| 2. | Eigenschaften | | | | | |
| 2.1 | Modul 200 (CSA-Norm C22.2 Nr. 96-09) | | N/mm² | ≥4,8 | 2,7 | 5,3 |
| 2.2 | Zugfestigkeit | | N/mm² | ≥16,5 | 17,1 | 17,3 |
| 2.3 | Reißdehnung | | % | ≥300 | 850 | 631 |
| 2.4 | bleibende Dehnung | | % | - | 45 | 30 |
| 2.5 | Shore A-Härte / IRHD-Härte | | | - | 64/74 | 73 / 75 |
| 2.6 | Kältedehnung (EN 60811-1-4) | | % | >30 | 5 | 62 |
| | bei-50°C | | | | | |
| 2.7 | Nach Ölalterung 18h; 121°C; IRM-Öl 902 (CSA-Norm C22.2 Nr. 96-09) | | | | | |
| | Verbleibende Zugfestigkeit | | %* | ≥60 | 88 | 96 |
| | Verbleibende Reißdehnung | | %* | ≥60 | 85 | 86 |
| 2.8 | Nach Heißluftalterung 168h; 100°C (CSA-Norm C22.2 Nr. 96-09) | | | | | |
| | Verbleibende Zugfestigkeit | | %* | ≥50 | 86 | 95 |
| | Verbleibende Reißdehnung | | %* | ≥50 | 69 | 77 |

| | | | | | | |
|---|---|---|---|---|---|---|
| *: vom Ausgangswert | | | | | | |

Die Ergebnisse zur Rheologie zeigen, dass die erfindungsgemäße Mischung für die Verarbeitung geeignete Eigenschaften aufweist. Die Messwerte bzw. Materialprüfungen der vernetzten Mischungen zeigen, dass die erfindungsgemäße Mantelmischung ausgewogene mechanische Eigenschaften hat und insbesondere bei tiefen Temperaturen drastisch bessere Werte aufweist. Auch die Beständigkeit gegen Ölalterung und nach Heißluftalterung ist für die erfindungsgemäße Mantelmischung signifikant erhöht und belegen in Kombination mit den Kälteeigenschaften die besondere Eignung der Mantelmischung für extreme Belastungen, insbesondere zur Verwendung als bewegter Mantel bis -40°C und bis -50°C als stationärer Mantel.

Die erfindungsgemäße vernetzte Mantelmischung erfüllt die Anforderungen, die nach der CSA-Norm C22.2 Nr. 96-09 an einen Mantel für extrem belastbare Kabel (extra heavy duty) gestellt werden, und weist insbesondere ein Modul200 von größer 4,8 N/mm² und eine Zugfestigkeit größer 16,5 N/mm² auf, und hat überdies hervorragende Kälteeigenschaften, z.B. eine Kältedehnung gemäß EN 60811-1-4 bei -50°C deutlich größer als 30% sowie ein Eigenschaftsprofil in Anlehnung an Niveau 5GM5 gemäß DIN VDE 0207-21.

Bevorzugt weisen vernetzte erfindungsgemäße Mantelmischungen in Kombination ein Modul200 von zumindest 4,8 N/mm², bevorzugt von zumindest 5,0 N/mm², auf, eine Zugfestigkeit von zumindest 16,5 N/mm², bevorzugt von zumindest 17 N/mm², bevorzugter von zumindest 17,3 N/mm², eine Shore A-Härte von zumindest 70, bevorzugt von zumindest 73, eine IRHD-Härte von zumindest 70, bevorzugt von zumindest 75, eine Kältedehnung nach EN 60811-1-4 bei -50°C von zumindest 30%, bevorzugter von zumindest 50%, insbesondere 60%, noch bevorzugter von zumindest 62% auf,
in Kombination mit einer nach Ölalterung für 18 h bei 121°C in IRM-Öl 902 verbleibenden Zugfestigkeit von zumindest 60%, bevorzugt von zumindest 90 %, bevorzugter von zumindest 96% und einer verbleibenden Reißdehnung von zumindest 60 %, bevorzugt von zumindest 80 %, bevorzugter von zumindest 86 %,
bevorzugt in Kombination mit einer nach Heißluftalterung für 168 h bei 100°C verbleibenden Zugfestigkeit von zumindest 50%, bevorzugt von zumindest 90 %, bevorzugter von zumindest 95% und einer verbleibenden Reißdehnung von zumindest 50 %, bevorzugt von zumindest 70 %, bevorzugter von zumindest 77 %,
vorzugsweise in Kombination mit einer Reißdehnung von zumindest 300 %, bevorzugt von zumindest 600 %, bevorzugter von zumindest 630 %, einer bleibenden Dehnung von maximal 30%,
bevorzugt ohne Rissbildung nach Ozonalterung gemäß VDE 0472 Teil 805, Prüfart B.

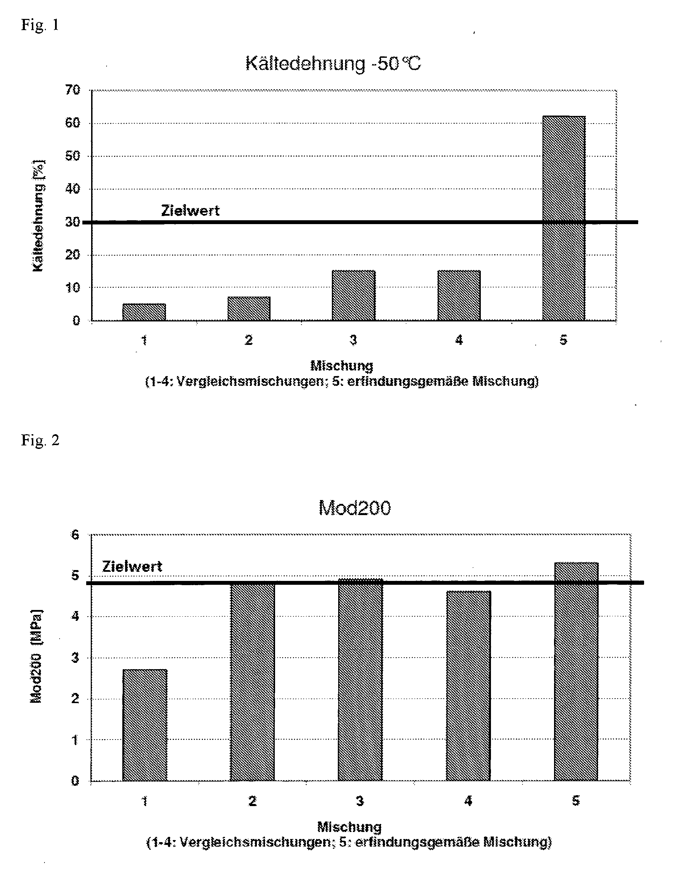

Die in Figur 1 gezeigten Werte für die Kältedehnung bei -50°C wurden für die Vergleichsmischung von Tabelle 2 (Mischung 1) und weitere Vergleichsmischungen (Mischungen 2 bis 4) sowie für erfindungsgemäße Mischungen (Mischung 5) bestimmt. Die Messergebnisse belegen die drastisch bessere Kältedehnung der erfindungsgemäßen Mischungen.

Die in Figur 2 gezeigten Werte für Modul200 wurden für dieselben vernetzten Mischungen bestimmt, die für die Messungen von Figur 1 verwendet wurden. Die erfindungsgemäßen Mischungen 5 haben hier den höchsten Wert für das Modul200.

## Patentansprüche

1. Vernetzbare Polymermischung zur Verwendung als Mantelmischung für elektrische und/oder optische Kabel und Leitungen mit einem Gehalt an Chloropren, die die folgenden Bestandteile enthält:
100 phr Chloropren oder einem Verschnitt aus Chloropren und einem weiteren Polymer, welcher ein polarer ungesättigter Kautschuk ist, mit einem Anteil bis max. 30 phr
3 bis 7 phr Stabilisator,
3 bis 7 phr Alterungsschutzmittel,
0 bis 7 phr Farbmittel,
ein Vernetzungssystem,
5,2 bis 12,2 phr Haftvermittler,
8 bis 15 phr Verarbeitungshilfsmittel,
40 bis 55 phr mineralischer Füllstoff und
5 bis 10 phr Weichmacher.

2. Polymermischung nach Anspruch 1, **dadurch gekennzeichnet, dass** der mineralische Füllstoff kalzinierte oder pyrogene Kieselsäure ist.

3. Polymermischung nach einem der voranstehenden Ansprüche, **dadurch gekennzeichnet, dass** der Weichmacher ein oder eine Mischung mehrerer Weichmacher mit einem Stockpunkt kleiner -60°C ist.

4. Polymermischung nach einem der voranstehenden Ansprüche, **dadurch gekennzeichnet, dass** der Haftvermittler Triethanolamin und/oder Schwefelsilan aufweist.

5. Polymermischung nach einem der voranstehenden Ansprüche, **dadurch gekennzeichnet, dass** der mineralische Füllstoff Kieselsäure eine spezifische Oberfläche von mindestens 170 qm/g ausweist.

6. Polymermischung nach einem der voranstehenden Ansprüche, **dadurch gekennzeichnet, dass** der Stabilisator MgO ist, das Alterungsschutzmittel Pentaerythritol-bis(tetrahydrobenzaldehydacetal), eine Diphenylverbindung und/oder eine Bisphenolverbindung aufweist und das Vernetzungssystem einen Verzögerer, ein Vernetzungsmittel und/oder Vulkanisationsbeschleuniger, einen Vernetzer und einen Aktivator aufweist.

7. Polymermischung nach einem der voranstehenden Ansprüche, **dadurch gekennzeichnet, dass** das Verarbeitungshilfsmittel eine Mischung aus Ozonschutzwachs, Paraffin, Stearinsäure und/oder Silikonöl ist.

8. Polymermischung nach einem der voranstehenden Ansprüche, **dadurch gekennzeichnet, dass** sie nach Vernetzung eine Kältedehnung gemäß EN 60811-1-4 bei - 50°C von mindestens 30% aufweist.

9. Elektrische und/oder optische Leitung oder Kabel, **gekennzeichnet durch** einen Außenmantel aus einer Polymermischung nach einem der voranstehenden Ansprüche.

10. Verwendung einer Polymermischung nach einem der Ansprüche 1 bis 8 als kältefester Mantel einer elektrischen und/oder optischen Leitung oder eines Kabels.

11. Verfahren zur Herstellung einer Leitung oder eines Kabels durch Extrudieren einer Polymermischung um zumindest einen elektrischen und/oder optischen Leiter und Vernetzen der Polymermischung, **dadurch gekennzeichnet, dass** die Polymermischung eine nach einem der Ansprüche 1 bis 8 ist, die durch Mischen ihrer Bestandteile hergestellt wird, extrudiert wird und anschließend vernetzt wird.

12. Verfahren nach Anspruch 11, **dadurch gekennzeichnet, dass** die Mischung zu einem Mantel der Leitung oder des Kabels extrudiert wird und durch Erwärmen vernetzt wird.

## Claims

1. A cross-linkable polymer mixture for use as a sheathing compound for electrical and/or optical cables and lines, having a chloroprene content, containing the following components:
100 phr chloroprene, or a blend of chloroprene and an additional polymer, which is a polar, unsubstituted rubber, having a portion of up to a maximum of 30 phr
3 to 7 phr stabilizer,
3 to 7 phr aging protection agent,
0 to 7 phr colorant,
a cross-linking system,
5.2 to 12.2 phr adhesion promoter,
8 to 15 phr processing aid,
40 to 55 phr mineral filler, and
5 to 10 phr softening agent.

2. A polymer mixture according to claim 1, **characterized in that** the mineral filler is calcinated or pyrogenic silica.

3. The polymer mixture according to one of the previous claims, **characterized in that** the softening agent is one, or a mixture of multiple softening agents, having a solidification point of less than -60°C.

4. The polymer mixture according to one of the previous claims, **characterized in that** the adhesion promoter has triethanol amine and/or sulfur silane.

5. The polymer mixture according to one of the previous claims, **characterized in that** the mineral filler silica has a specific surface of at least 170 qm/g.

6. The polymer mixture according to one of the previous claims, **characterized in that** the stabilizer is MgO, the aging protection agent is pentaerythritol-bis(tetrahydrobenzal dehyde acetal), a diphenyl compound, and/or a bisphenol compound, and the cross-linking system comprises a retarding agent, a cross-linking agent, and/or vulcanization accelerator, a cross-linker, and an activator.

7. The polymer mixture according to one of the previous claims, **characterized in that** the processing aid is a mixture of ozone protecting wax, paraffin, stearic acid, and/or silicone oil.

8. The polymer mixture according to one of the previous claims, **characterized in that** the same has a cold expansion according to EN 60811-1-4 at -50°C of at least 30% after cross-linking.

9. An electric and/or optical line or cable, **characterized by** an exterior sheath made of a polymer mixture according to one of the previous claims.

10. A use of a polymer mixture according to one of the claims 1 to 8 as a cold-resistant sheath of an electric and/or optical line or cable.

11. A method for the production of a line, or of a cable, by means of extruding a polymer mixture around at least one electric and/or optical conductor, and cross-linking the polymer mixture, **characterized in that** the polymer mixture is one according to one of the claims 1 to 8, which is produced by mixing the components thereof, is extruded, and subsequently cross-linked.

12. The method according to claim 11, **characterized in that** the mixture is extruded into a sheath of the line or of the cable, and is cross-linked by means of heating.

## Revendications

1. Mélange de polymères réticulables, pour utilisation en tant que mélange de gainage pour câbles et conduites électriques et/ou optiques, contenant du chloroprène, qui contient les constituants suivants :
100 phr de chloroprène ou d'un mélange de chloroprène et d'un autre polymère, lequel est un caoutchouc insaturé polaire présent en une quantité maximale de 30 phr,
3 à 7 phr d'un stabilisant,
3 à 7 phr d'un agent de protection contre le vieillissement,
0 à 7 phr d'un colorant,
un système de réticulation,
5,2 à 12,2 phr d'un promoteur d'adhérence,
8 à 15 phr d'un auxiliaire de mise en oeuvre,
40 à 55 phr d'une charge minérale et
5 à 10 phr d'un plastifiant.

2. Mélange de polymères selon la revendication 1, **caractérisé en ce que** la charge minérale est une silice calcinée ou pyrogène.

3. Mélange de polymères selon l'une des revendications précédentes, **caractérisé en ce que** le plastifiant est un plastifiant, ou un mélange de plusieurs plastifiants, ayant un point de solidification inférieur à -60°C.

4. Mélange de polymères selon l'une des revendications précédentes, **caractérisé en ce que** le promoteur d'adhérence est la triéthanolamine et/ou un silane sulfuré.

5. Mélange de polymères selon l'une des revendications précédentes, **caractérisé en ce que** la charge minérale silice a une aire spécifique d'au moins 170 m²/g.

6. Mélange de polymères selon l'une des revendications précédentes, **caractérisé en ce que** le stabilisant est MgO, l'agent de protection contre le vieillissement comprend du pentaérythritol-bis(tétrahydrobenzaldéhyde-acétal), un composé diphényle et/ou un composé bisphénol, et le système de réticulation comprend un retardateur, un agent de réticulation et/ou un accélérateur de vulcanisation, un réticulant et un activateur.

7. Mélange de polymères selon l'une des revendications précédentes, **caractérisé en ce que** l'auxiliaire de mise en oeuvre est un mélange d'une cire de protection anti-ozone, de paraffine, d'acide stéarique et/ou d'une huile de silicone.

8. Mélange de polymères selon l'une des revendications précédentes, **caractérisé en ce que**, après réticulation, il présente un allongement à froid selon EN 60811-1-4 à -50°C d'au moins 30 %.

9. Conduite ou câble électrique et/ou optique, **caractérisé par** une gaine extérieure en un mélange de polymères selon l'une des revendications précédentes.

10. Utilisation d'un mélange de polymères selon l'une des revendications 1 à 8 en tant que gaine résistante au froid d'une conduite ou d'un câble électrique et/ou optique.

11. Procédé de fabrication d'une conduite ou d'un câble par extrusion d'un mélange de polymères autour d'au moins un conducteur électrique et/ou optique, et réticulation du mélange de polymères, **caractérisé en ce que** le mélange de polymères est un mélange de polymères selon l'une des revendications 1 à 8, qui est fabriqué par mélange de ses constituants, extrudés, puis réticulés.

12. Procédé selon la revendication 11, **caractérisé en ce que** le mélange est extrudé pour former une gaine de la conduite ou du câble, et est réticulé par chauffage.
